# DEMANDE DE BREVET EUROPEEN

(11) **EP 2 813 395 A1**
(43) Date de publication de la demande: **17.12.2014**
(21) Numéro de dépôt: 14171256.2
(22) Date de dépôt: 05.06.2014
(51) Int. Cl.: B60Q 1/08, B60Q 1/14, F21S 8/12

(54) **Projecteur pour véhicule automobile comprenant une source de lumière laser et procédé de réalisation d'un faisceau d'éclairage**

(30) Priorité: 11.06.2013 FR 1355391
(71) Demandeur: VALEO VISION, 93012 Bobigny (FR)
(72) Inventeur: Boinet, Loïc, 76240 Le Mesnil Esnard (FR)

(57) **Abrégé**

L'invention concerne un projecteur pour véhicule automobile comprenant un premier module (12) qui comporte au moins une source de lumière laser (18) apte à émettre un rayonnement (L) vers un système de mise en forme (20) qui le dirige vers un dispositif de conversion (22) du rayonnement en lumière blanche (B). Le dispositif de conversion (22) est apte à réémettre le rayonnement de lumière blanche (B) vers un système optique (24), de sorte que le rayonnement de lumière blanche (B) forme une première partie d'un faisceau d'éclairage du projecteur. Le projecteur comprend par ailleurs au moins un deuxième module apte à former une deuxième partie du faisceau, les première et deuxième parties étant aptes à former, sur un même écran, des images ayant des contours respectifs au moins partiellement non coïncidents.

L'invention concerne également un véhicule automobile comprenant un tel projecteur et un procédé de réalisation d'un faisceau d'éclairage.

## Description

La présente invention concerne le domaine technique des projecteurs pour véhicule automobile, plus particulièrement, des projecteurs adaptifs.

On connaît des véhicules automobiles dotés de projecteurs d'éclairage permettant de former des faisceaux lumineux à l'avant du véhicule dont les dimensions, l'intensité et/ou la direction sont adaptables, dans une certaine mesure, afin de tenir compte des conditions de circulation. Ces projecteurs utilisent des technologies connues sous les appellations en anglais de « Matrix beam », de « Pixel lighting » ou de « Picture beam ». Ces projecteurs permettent notamment de créer des zones d'ombres dans le faisceau, par exemple en configuration dite « de route », afin de ne pas éblouir un conducteur d'un véhicule situé devant le véhicule ou venant en sens inverse.

Cependant, la modification du faisceau est obtenue grâce à la conception de projecteurs complexes et nécessitant des réglages fins afin d'obtenir le résultat désiré ou grâce à des dispositifs mécaniques motorisés permettant notamment de tenir compte de l'assiette du véhicule automobile ou permettant de modifier l'orientation horizontale du faisceau lorsque le véhicule se déplace sur une trajectoire incurvée.

En outre, la flexibilité de tels systèmes se fait généralement au détriment de leur encombrement.

L'invention a pour but de remédier à ces inconvénients en fournissant un projecteur dont l'encombrement est réduit et dont la flexibilité est améliorée.

À cet effet, l'invention a pour objet un projecteur pour véhicule automobile, comprenant au moins un premier module comportant :
- au moins une source de lumière laser apte à émettre un rayonnement, et
- au moins un système de mise en forme du faisceau apte à recevoir le rayonnement et à le diriger vers au moins un dispositif de conversion du rayonnement en lumière blanche, le dispositif de conversion étant apte à réémettre le rayonnement de lumière blanche vers au moins un système optique, de sorte que le rayonnement de lumière blanche forme une première partie d'un faisceau d'éclairage du projecteur,
le projecteur comprenant par ailleurs au moins un deuxième module apte à former une deuxième partie du faisceau, les première et deuxième parties étant aptes à former, sur un même écran, des images ayant des contours respectifs au moins partiellement non coïncidents.

On entend par « image » la visualisation du faisceau projeté sur l'écran. Lécran est placé à une distance finie du projecteur, par exemple à 25 mètres ce qui permet ainsi de visualiser le faisceau tel que projeté à l'infini.

Du fait que les parties du faisceau sont aptes à former des images ayant des contours respectifs au moins partiellement non coïncidents, il est possible d'augmenter l'intensité du faisceau obtenu dans certaines zones seulement.

Il est également possible de s'affranchir de tout ou partie des moyens mécaniques motorisés de correction du faisceau verticalement et/ou horizontalement, notamment lorsque la coupure horizontale du faisceau est réalisée grâce au premier module.

Le projecteur peut en outre comporter une ou plusieurs des caractéristiques suivantes, prises seules ou en combinaison.
- Le système de mise en forme est statique. La mise en forme du rayonnement laser est réalisée au moyen d'un système optique d'imagerie, par exemple une lentille. On entend par « système de mise en forme statique », un système de mise en forme qui permet de former de manière statique une image sur le dispositif de conversion. Toutefois, ce système peut être déplacé notamment pour corriger la coupure horizontale du faisceau.
- Le système de mise en forme est dynamique et comprend un système de balayage. Ainsi, le système de mise en forme étant dynamique, la source laser et son système de balayage ont pour avantage d'offrir une grande souplesse pour la répartition de la lumière. Grâce au fait qu'au moins une partie du faisceau est formée par le premier module comprenant la source laser, il est possible d'adapter de manière simple le faisceau produit par le projecteur. En effet, la forme de cette partie du faisceau peut être adaptée facilement par le système de balayage qui répartit le rayonnement sur la surface du dispositif de conversion. Et, grâce à la combinaison avec une autre partie du faisceau, l'intensité du faisceau obtenu notamment peut être adaptée aussi sans avoir à faire varier l'intensité de la source laser du premier module.
- Le premier module comporte n sources de lumière laser et m systèmes de mise en forme, m et n étant deux nombres entiers naturels et m étant inférieur ou égal à n. Ainsi, on dispose d'une grande liberté pour configurer le faisceau. On peut adapter la forme ou l'intensité de chaque partie du faisceau formé par un des modules. On peut également pallier la défaillance d'une source de lumière et/ou d'un système de mise en forme. En effet, si une des sources de lumière est défaillante, il est possible de modifier les déplacements du système de mise en forme d'une ou plusieurs autres sources et/ou de modifier l'intensité d'une ou plusieurs autres sources afin d'obtenir une partie de faisceau satisfaisant aux réglementations en vigueur. Lorsque m est égal à n, chaque source est dirigée respectivement sur un unique système de mise en forme alors que lorsque m est inférieur à n, plusieurs sources sont dirigées vers un même système de mise en forme.
- Le premier module comporte un unique dispositif de conversion. Notamment, lorsque que le premier module comporte deux sources de lumière laser et deux systèmes de mise en forme, on peut adapter l'intensité de la partie du faisceau formé par le premier module en additionnant les rayonnements reçus par le dispositif de conversion et ce, sans modifier l'intensité du rayonnement laser émis par chaque source. En outre, la présence d'un unique dispositif de conversion permet de réduire l'encombrement du premier module.
- Le deuxième module comprend au moins une source de lumière laser apte à émettre un deuxième rayonnement et au moins un système de mise en forme apte à recevoir le deuxième rayonnement et à le diriger vers au moins un dispositif de conversion du rayonnement en lumière blanche. Grâce à l'utilisation de deux modules comprenant chacun au moins une source de lumière laser, on obtient une grande flexibilité dans le choix de la forme et/ou de l'intensité des parties du faisceau formées par ces modules. Le système de mise en forme du deuxième module peut être, comme pour le premier module, soit dynamique, soit statique.
- Le projecteur comprend trois modules. Avantageusement, l'utilisation de trois modules augmente la flexibilité d'utilisation du projecteur et donc du faisceau produit par ce projecteur. Par exemple le projecteur peut comprendre un module comportant au moins une source de lumière laser et deux modules n'en comportant pas ou deux modules comportant chacun au moins une source de lumière laser et un module comportant au moins une LED, ou encore trois modules comportant chacun au moins une source laser.
- Le système de mise en forme et le système optique sont situés d'un même côté du dispositif de conversion. Ainsi, le dispositif de conversion est utilisé en réflexion. Il y a donc moins de pertes que lors de son utilisation en transmission. En outre, il est possible d'utiliser un matériau non transparent pour le dispositif de conversion, ce qui permet notamment d'utiliser des matériaux ayant une bonne dissipation de la chaleur, tel que par exemple de l'aluminium, le cuivre, la céramique.
- La source de lumière laser et le système de balayage sont compris dans un système microoptoélectromécanique. Le système microoptoélectromécanique, appelé MOEMS conformément au sigle anglais pour « Micro-Opto-Electro-Mechanical Systems », est un système optique comprenant, dans le cas présent, au moins une source de lumière laser et un système de balayage. Les MOEMS sont des dispositifs compacts, fiables, simples à utiliser et qui permettent une grande précision et une grande flexibilité de redirection du rayonnement vers le dispositif de conversion.
- Le projecteur est agencé de sorte que les contours respectifs des deux images sont au moins partiellement coïncidents. Ainsi, les contours des images formées sur un même écran d'au moins deux parties du faisceau peuvent avoir chacun au moins une partie de leurs contours respectifs en commun, c'est-à-dire que les contours n'ont pas uniquement des intersections ponctuelles. Par exemple, sur un même écran, les images respectives de deux parties du faisceau peuvent avoir une fraction de leurs contours respectifs qui se superposent.
- Le projecteur est agencé de sorte que les images ont des contours confondus.
- Le projecteur est agencé de sorte que les contours respectifs des deux images sont non coïncidents. Ainsi les contours des images formées sur un même écran d'au moins deux parties du faisceau peuvent par exemple ne pas avoir de point d'intersection. Sur un même écran, les images respectives de deux parties du faisceau peuvent être disjointes ou l'une des images peut être entièrement comprise dans l'autre.
- Le projecteur est agencé de sorte que les images sont partiellement superposées.
- Le projecteur est agencé de sorte que les images ne sont pas superposées.
- Le projecteur est agencé de sorte que les images des modules sont au moins au nombre de trois et comprennent une intersection commune aux trois images.

Un autre objet selon l'invention est un véhicule automobile comprenant au moins un projecteur selon la présente invention.

L'invention a également pour objet un procédé de réalisation d'un faisceau d'éclairage comprenant les étapes suivantes :
- on forme une première partie du faisceau au moyen d'au moins un premier module d'un projecteur, le premier module comportant au moins une source de lumière laser émettant un premier rayonnement, au moins un système de mise en forme recevant le premier rayonnement et à le dirigeant vers au moins un dispositif de conversion du rayonnement en lumière blanche, le dispositif de conversion réémettant le rayonnement de lumière blanche vers au moins un système optique,
- on forme une deuxième partie du faisceau au moyen d'au moins un deuxième module du projecteur,
- on forme le faisceau au moins au moyen des deux parties du faisceau, les première et deuxième parties formant, sur un même écran, des images ayant des contours respectifs au moins partiellement non coïncidents.

L'invention sera mieux comprise à la lecture de la description qui va suivre, donnée uniquement à titre d'exemple non limitatif de la portée de l'invention et faite en se référant aux figures, dans lesquelles :
- la figure 1 est une vue en perspective d'un projecteur selon l'invention,
- la figure 2 est une vue schématique d'un premier module selon l'invention,
- la figure 3A illustre un premier faisceau, dit faisceau de croisement, produit par un ensemble de deux projecteurs selon l'invention tel qu'apparaissant sur un écran,
- les figures 3B à 3E illustrent un premier agencement des zones du faisceau de la figure 3A produit par les trois modules du projecteur,
- les figures 4 à 7 illustrent schématiquement un deuxième, un troisième, un quatrième et un cinquième agencements des zones d'un faisceau produit par un projecteur selon l'invention, tel qu'apparaissant sur un écran,
- la figure 8 illustre schématiquement un premier faisceau, dit faisceau de croisement, produit par un projecteur selon l'agencement de la figure 7, tel qu'apparaissant sur un écran,
- la figure 9 illustre schématiquement un deuxième faisceau, dit faisceau de mauvais temps, appelé AWL conformément au sigle anglais pour «Adverse Weather Light », produit par un projecteur selon l'agencement de la figure 7, tel qu'apparaissant sur un écran,
- la figure 10 illustre schématiquement un troisième faisceau, dit faisceau de route, produit par un projecteur selon l'agencement de la figure 7, tel qu'apparaissant sur un écran,
- la figure 11 illustre schématiquement un quatrième faisceau, dit faisceau de route anti-éblouissement, produit par un projecteur selon l'agencement de la figure 7, tel qu'apparaissant sur un écran.

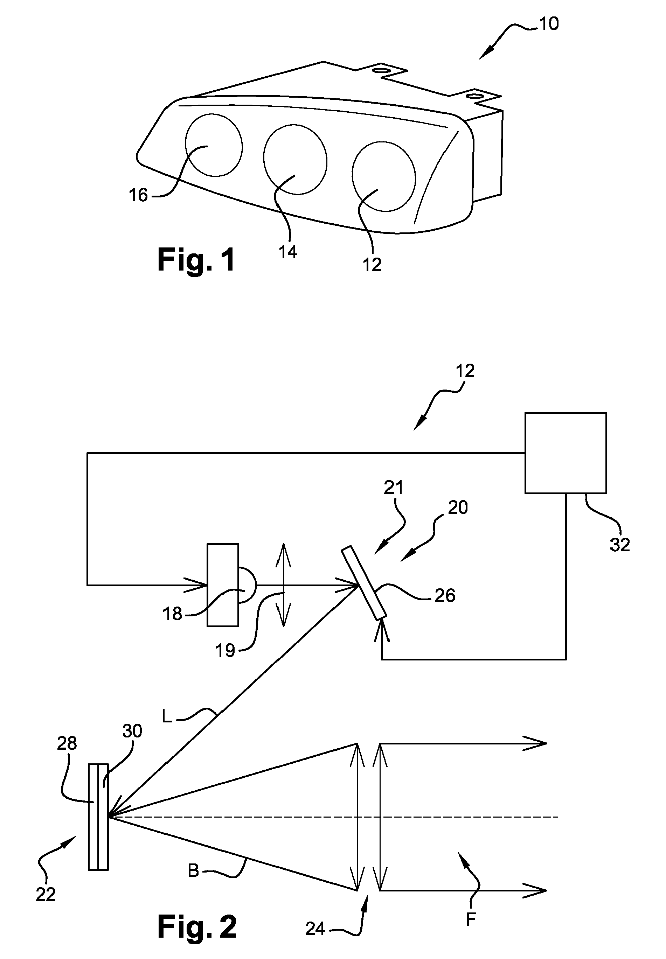

On a représenté sur la figure 1 un projecteur 10 pour véhicule automobile. Ce projecteur comprend trois modules 12, 14, 16.

Dans cet exemple représenté sur la figure 2, le premier module 12 comprend une source de lumière laser 18, un système de mise en forme 20 comprenant un système de balayage 21, un dispositif de conversion 22 du rayonnement en lumière blanche et un système optique 24. Le module 12 peut également comporter des moyens classiques 19 de focalisation de la source 18, ces moyens 19 étant interposés entre la source 18 et le système de balayage 21.

La source de lumière laser 18 est dans le cas présent une diode laser apte à émettre un rayonnement laser L dont la longueur d'onde est comprise entre 400 et 500 nanomètres (nm), de préférence entre 450 et 460 nm.

Le système de balayage 21 comprend un micro-miroir 26 monté mobile autour de deux axes orthogonaux et le dispositif de conversion 22 comprend un support 28 réfléchissant le rayonnement laser et sur lequel est déposé une couche continue 30 de matériau phosphorescent.

On notera que le système de balayage 21 et le système optique 24 sont situés d'un même côté du dispositif de conversion 22, c'est-à-dire que le dispositif de conversion 22 est utilisé en réflexion.

Avantageusement, le support 28 est choisi parmi des matériaux qui sont thermiquement bons conducteurs. Il est donc possible de limiter la dégradation de la couche 30 de matériau phosphorescent en limitant l'élévation de température du dispositif de conversion 22 et de la couche 30.

Lorsque la source de lumière laser 18 émet un rayonnement L, ce rayonnement L est reçu par le système de balayage 21 qui le dirige vers le dispositif de conversion 22.

Le dispositif de conversion 22 reçoit le rayonnement laser monochromatique et cohérent L et réémet un rayonnement de lumière blanche B, c'est-à-dire comprenant une pluralité de longueurs d'ondes comprise entre environ 400 et 800 nm. Cette émission de lumière se produit selon un diagramme d'émission lambertienne, c'est-à-dire avec une luminance uniforme dans toutes les directions d'émission.

Le dispositif de conversion 22 étant situé au voisinage du plan focal du système optique 24, tel qu'une lentille, la lumière blanche B ainsi obtenue est émise notamment vers le système optique 24 et forme, du côté opposé de la lentille, à l'infini, une image des points de la couche 30 de matériau phosphorescent qui émettent de la lumière blanche B en réponse au rayonnement laser L reçu. Le balayage des points de la couche 30 étant réalisé à grande vitesse, la lumière blanche B émise par le dispositif de conversion 22 permet de former un faisceau lumineux F, dans le cas présent, une partie du faisceau lumineux produit par le projecteur 10 qui comprend le module 12.

La forme et l'intensité de la partie du faisceau formée par le module 12 dépendent notamment de l'intensité de la source de lumière laser 18 et des déplacements du système de balayage 21.

Sur la figure 2, on a représenté un module 12 qui comprend une unique source de lumière laser 18, un unique système de balayage 21, un unique dispositif de conversion 22 du rayonnement en lumière blanche et un unique système optique 24. Cependant, on comprend que le module 12 peut comporter, par exemple, deux sources de lumière laser 18 émettant chacune un rayonnement vers un même système de balayage 21. En variante, les deux sources 18 peuvent émettre chacune un rayonnement vers des systèmes de balayage 21 respectivement distincts. Les systèmes de balayage 21 peuvent émettre le rayonnement laser L vers le même dispositif de conversion 22 ou des dispositifs 22 différents. Le dispositif optique 24 peut recevoir la lumière blanche B d'un ou de plusieurs dispositifs de conversion 22. Le module 12 peut également comporter plus de deux sources 18.

Le module 12 comprend en outre une unité de contrôle 32 qui permet de contrôler notamment la puissance de la source de lumière laser 18 et les mouvements du système de balayage 21.

Le système de mise en forme 20 peut également être statique et comprendre par exemple une lentille. L'unité de contrôle 32 peut alors contrôler le positionnement de cette lentille afin notamment de tenir compte des corrections de coupure du faisceau.

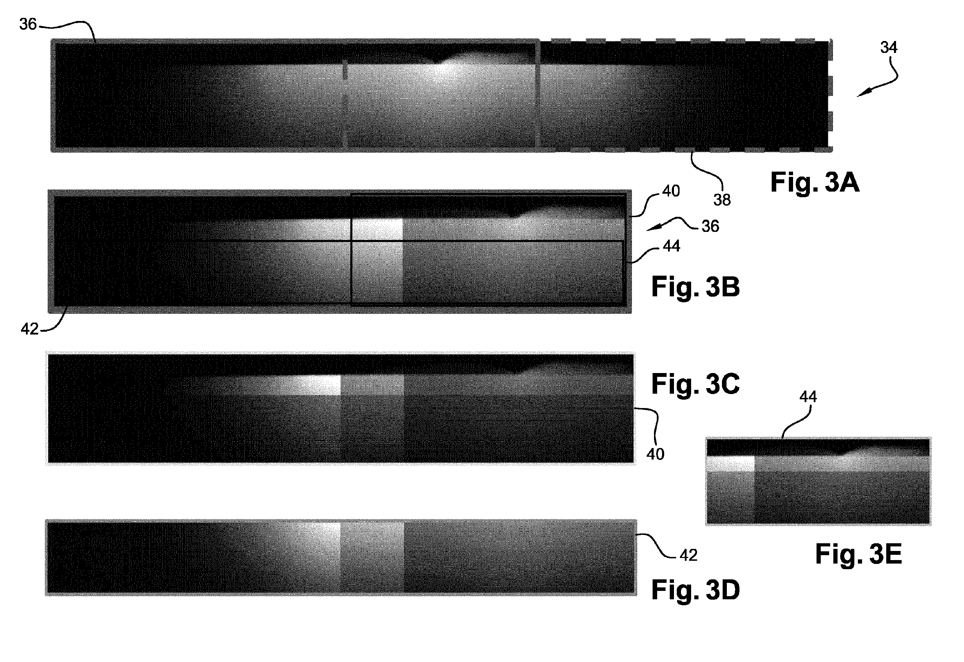

On a représenté sur la figure 3A un faisceau global 34, dit faisceau de croisement, tel qu'apparaissant sur un écran et produit par un ensemble de deux projecteurs 10. Chaque projecteur contribue à la formation du faisceau global 34, le projecteur gauche étant apte à former une portion gauche 36 du faisceau 34 et le projecteur droit étant apte à former une portion droite 38 du faisceau 34. La portion 36 peut elle-même être décomposée en plusieurs zones 40, 42, 44. Il en va de même de la portion 38. Les zones 40, 42, 44 sont formées par un unique projecteur 10 et les figures 3B à 3E illustrent l'agencement des zones 40, 42, 44 du faisceau 36 formé par les modules 12, 14, 16 du projecteur 10. Chaque zone 40, 42, 44 représente sur l'écran les surfaces pouvant être éclairées par la partie respective du faisceau émise par chaque module 12, 14, 16. On comprend donc que le faisceau 36 est formé par la superposition des trois parties différentes du faisceau 36.

Comme on peut le voir sur la figure 3B, la zone 40 occupe toute la portion 36, la zone 42 occupe toute la partie basse de la portion 36, et la zone 44 toue sa partie droite. Chacune des zones 40, 42, 44 forme, sur un même écran, des surfaces ayant des contours respectifs au moins partiellement non coïncidents, ici rectangulaires. Ainsi, la portion 36 du faisceau 34 est formée par la zone 40, dont la surface couvre toute la surface de la portion 36, sur laquelle viennent se superposer les zones 42 et 44. Les côtés gauche, inférieur et droit du contour de la zone 42 se superposent à une première fraction du contour de la zone 40 et les côtés inférieur, droit et supérieur du contour de la zone 44 se superposent à une deuxième fraction du contour de la zone 40. Le côté droit du contour de la zone 40 se superpose également à une fraction du côté droit du contour de la zone 44 et le côté inférieur du contour de la zone 44 se superpose à une fraction du côté inférieur du contour de la zone 42. Ainsi, les zones 40, 42, 44 ont donc des fractions de leurs contours respectifs qui sont non coïncidentes.

Il découle de l'agencement des zones 40, 42, 44 que les parties du faisceau délimitées par chacune de ces zones ont donc également, lorsqu'elles sont projetées sur un même écran, des contours respectifs au moins non coïncidents.

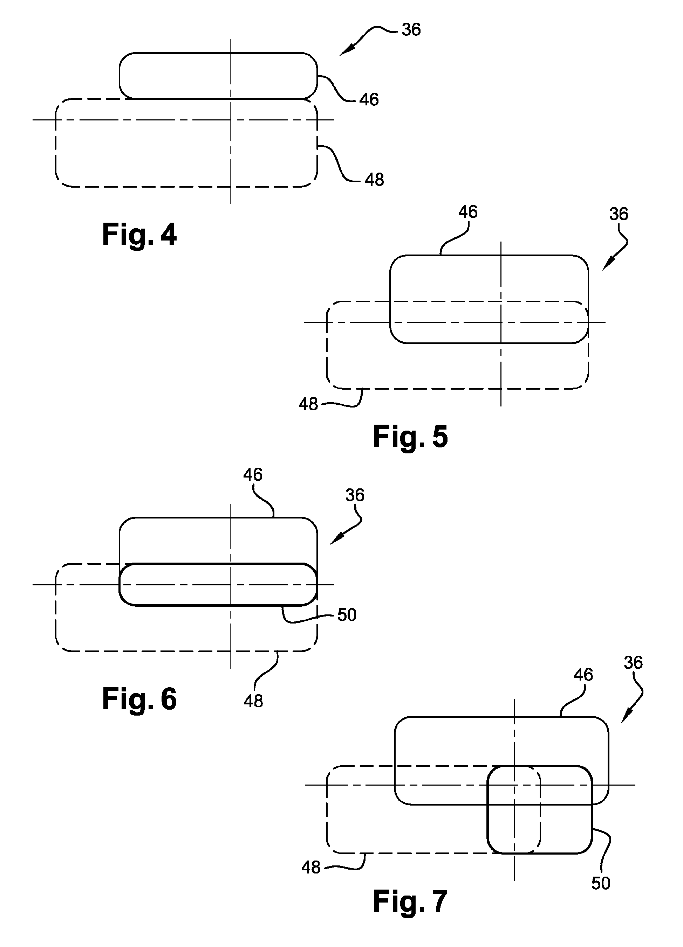

On a représenté sur les figures 4 à 7 d'autres agencements des zones du faisceau 36 produit par un projecteur 10, dans ces exemples, le projecteur gauche.

Sur la figure 4, le faisceau 36 est formé de deux zones 46 et 48, la zone 46 ayant un côté inférieur horizontal de son contour qui coïncide avec une fraction supérieure horizontale du contour de la zone 48, les côtés droits des deux zones 46, 48 étant alignés verticalement.

Sur la figure 5, le faisceau 36 est également formé de deux zones 46 et 48 qui se recouvrent partiellement, la région inférieure de la zone 46 se superposant à la région supérieure droite de la zone 48. Une fraction du côté droit du contour de la zone 46 se superpose à une fraction du côté droit du contour de la zone 48, les côtés droits des deux zones 46, 48 étant alignés verticalement. Le côté gauche du contour de la zone 46 et le côté supérieur du contour de la zone 48 forment une intersection ponctuelle.

Sur les figures 6 et 7, le faisceau 36 est formé de trois zones 46, 48 et 50.

L'agencement de la figure 6 est similaire à celui de la figure 5 sur lequel une troisième zone 50 se superpose à la région de recouvrement partiel des zones 46 et 48. Il est donc possible dans la zone 50 de superposer les parties du faisceau 36 formées par trois modules et donc obtenir une intensité de faisceau plus importante dans cette zone. Sur la figure 6, les côtés gauche et droit du contour de la zone 50 se superposent respectivement à une fraction des côtés gauche et droit du contour de la zone 46. Le côté inférieur du contour de la zone 50 se superpose au côté inférieur du contour de la zone 46. Les côtés supérieur et droit du contour de la zone 50 se superposent respectivement à une fraction des côtés supérieur et droit du contour de la zone 48. Les côtés droits des trois zones 46, 48, 50 sont alignés verticalement. Les zones 46 et 50 ont donc des contours partiellement non coïncidents et les zones 48 et 50 ont également des contours partiellement non coïncidents.

Sur la figure 7, une fraction des côtés supérieur et inférieur du contour de la zone 48 se superposent respectivement à une fraction des côtés supérieur et inférieur du contour de la zone 50. Les zones 48 et 50 se superposent partiellement, dans leurs régions droite et gauche, respectivement. Les côtés supérieur et inférieur des zones 48 et 50 sont alignés horizontalement. Les contours des zones 48, 50 ont chacun deux intersections ponctuelles avec le contour de la zone 46. Les zones 48 et 50 recouvrent partiellement la zone 46, la région supérieure droite de la zone 48 se superposant à la région inférieure gauche de la zone 46 et la région supérieure de la zone 50 se superposant à la région inférieure droite de la zone 46. Cependant, les côtés droit et gauche des zones 46, 48, 50 ne sont pas alignés verticalement. Les trois zones 46, 48, 50 possèdent donc une intersection commune dans laquelle les trois parties du faisceau 36 peuvent se superposer.

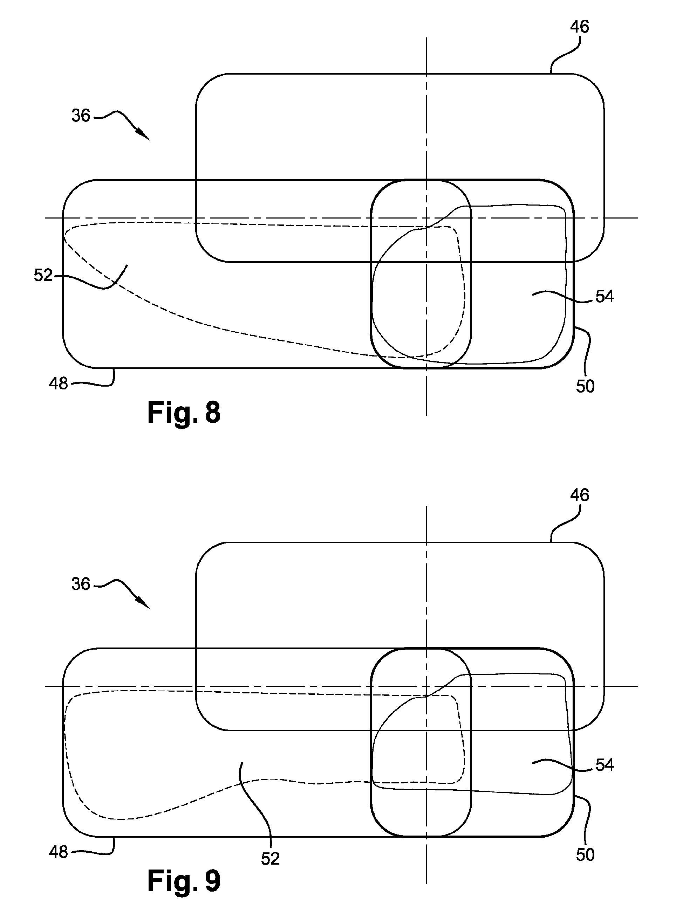

Les figures 8 à 11 illustrent schématiquement des faisceaux 36 produits par un même projecteur 10 selon l'agencement de la figure 7, tel qu'apparaissant sur un écran et en fonction du type de commande qui lui est appliqué. Chaque partie 52, 54, 56 du faisceau est formée, dans ces exemples, respectivement par un module 12, 14, 16 du projecteur 10. Chacun des modules 12, 14, 16 comprend respectivement au moins une source de lumière laser. Toutefois, on comprendra que dès lors qu'au moins un des modules comprend une source de lumière laser, le projecteur 10 présente les avantages cités ci-dessus.

Avantageusement, lorsque les trois modules comprennent une source de lumière laser 18, il est possible d'adapter la forme et l'intensité du faisceau de manière simple. En outre, il est possible en modifiant les mouvements des dispositifs de balayage 21 de modifier la coupure horizontale du faisceau 36 lorsque l'assiette du véhicule est modifiée et de permettre d'orienter horizontalement le faisceau 36 lorsque le véhicule se déplace sur une trajectoire incurvée et ce, en s'affranchissant de tout ou partie des moyens mécaniques motorisés de correction du faisceau verticalement et/ou horizontalement par modification de l'orientation du projecteur 10.

Ainsi, il est possible de faire varier la coupure horizontale entre -15° et +10° par rapport à une position de référence de l'assiette du véhicule. Il est également possible de faire varier horizontalement l'orientation de la partie du faisceau dit de croisement entre -45° et 15° par rapport un axe médian du véhicule, pour le projecteur gauche afin d'éclairer la route lorsque le véhicule se déplace sur une trajectoire incurvée et faire varier horizontalement l'orientation de la partie du faisceau dit de route entre -20° et +20° par rapport à ce même axe médian.

Sur la figure 8, on a représenté un faisceau 36 dit de croisement qui émet un faisceau de lumière délimité à gauche par un plan de coupure supérieure, incliné d'environ 1% par rapport à l'horizontale et descendant, donnant au conducteur une visibilité sur une distance de l'ordre de 60 à 80 mètres. La coupure supérieure a pour but d'éviter d'éblouir les autres usagers présents dans la scène de route s'étendant devant le véhicule ou sur les bas-côtés de la route. Le faisceau 36 est formé par la superposition d'une première partie 52 et d'une deuxième partie 54 du faisceau. On constate que dans la zone de recouvrement des zones 48 et 50, l'intensité du faisceau 36 est plus importante et ce, grâce à la superposition des première 52 et deuxième 54 parties émises respectivement par deux modules du projecteur 10. Les deux parties 52 et 54 du faisceau 36 forment sur un même écran des images dont les contours sont au moins partiellement non coïncidents. On notera sur la figure 8, que le module permettant de former la partie du faisceau dans la zone 46 est éteint.

Sur la figure 9, on a représenté un faisceau 36 dit de mauvais temps qui est une modification du faisceau dit de croisement de telle sorte qu'un conducteur d'un véhicule circulant en sens inverse ne soit pas ébloui par le reflet de la lumière des projecteurs sur la route mouillée. Tout comme sur la figure 8, le faisceau 36 est formé par la superposition d'une première partie 52 et d'une deuxième partie 54 du faisceau. Les deux parties 52 et 54 du faisceau 36 forment sur un même écran des images dont les contours sont au moins partiellement non coïncidents. Dans cet exemple, le module permettant de former la partie du faisceau dans la zone 46 est également éteint.

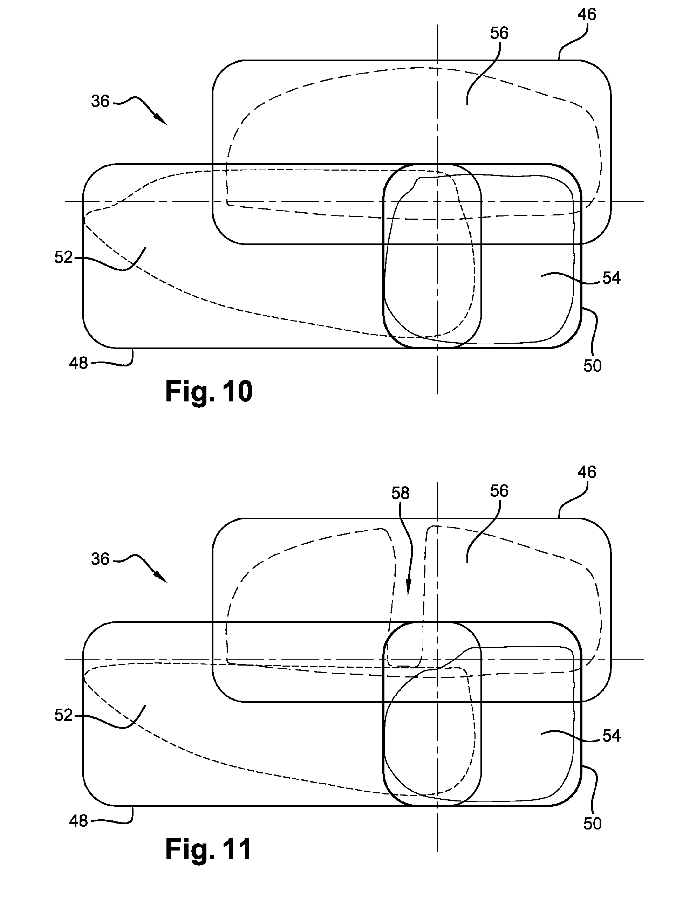

Sur la figure 10, on a représenté un faisceau 36 dit de route qui émet un faisceau lumineux dirigé vers l'horizon et qui éclaire la scène de route intégralement sur une distance d'environ 200 mètres. Le faisceau 36 est formé par la superposition d'une première partie 52, d'une deuxième partie 54 et d'une troisième partie 56 du faisceau. On constate que dans les régions de recouvrement des zones 46, 48 et 50, l'intensité du faisceau 36 est plus importante et ce, grâce à la superposition des premières 52, deuxième 54 et troisièmes 56 parties du faisceau émises respectivement par les trois modules 12, 14, 16 du projecteur 10. Les trois parties 52, 54 et 56 du faisceau 36 forment sur un même écran des images dont les contours sont au moins partiellement non coïncidents.

Sur la figure 11, on a représenté un faisceau 36 dit de route qui émet un faisceau lumineux dirigé vers l'horizon et qui éclaire la scène de route intégralement sur une distance d'environ 200 mètres. Tout comme sur la figure 10, le faisceau 36 est formé par la superposition d'une première partie 52, d'une deuxième partie 54 et d'une troisième partie 56 du faisceau. Toutefois, le faisceau 36 comporte une région médiane supérieure 58 non éclairée par le faisceau 36. Cela permet de ne pas éblouir un conducteur venant en sens inverse ou un conducteur situé devant le véhicule tout en gardant la configuration dite de route.

L'invention n'est pas limitée aux modes de réalisation présentés et d'autres modes de réalisation apparaîtront clairement à l'homme du métier.

Ainsi, le projecteur 10 peut comprendre un premier module selon l'invention et des deuxième et troisième modules ne comprenant pas de source de lumière laser. Le projecteur 10 peut également comprendre deux modules comprenant chacun au moins une source de lumière laser 18, au moins un système de mise en forme 20 et au moins un dispositif de conversion du rayonnement en lumière blanche 22 et un troisième module n'en comportant pas. Le projecteur 10 peut également comprendre deux modules. Il peut également comprendre trois modules, deux des modules contribuant à la formation de la partie du faisceau d'une même zone. Le nombre de modules n'est bien entendu pas limité à trois par projecteurs 10. En outre, les exemples donnés décrivant un faisceau pour un véhicule circulant sur le côté droit d'une chaussée, on comprend que si le véhicule circule sur le côté gauche, les agencements et les parties du faisceau décrits sont inversés par rapport à un axe vertical.

Le cas échéant, le ou les modules sans source laser peuvent avoir une source d'éclairage classique, telle qu'une LED.

On comprend également que les différents faisceaux 36 sont cités à titre d'exemples non limitatifs et qu'il est possible notamment de former les faisceaux suivants : faisceau d'éclairage de ville, faisceau d'éclairage d'autoroute, feu de portique, feu de brouillard.

## Revendications

1. Projecteur (10) pour véhicule automobile, **caractérisé en ce qu'**il comprend au moins un premier module (12, 14, 16) comportant :
- au moins une source de lumière laser (18) apte à émettre un rayonnement (L), et
- au moins un système de mise en forme (20) apte à recevoir le rayonnement (L) et à le diriger vers au moins un dispositif de conversion (22) du rayonnement en lumière blanche (B), le dispositif de conversion (22) étant apte à réémettre le rayonnement de lumière blanche (B) vers au moins un système optique (24), de sorte que le rayonnement de lumière blanche (B) forme une première partie (52, 54, 56) d'un faisceau d'éclairage (36, 38) du projecteur (10),
le projecteur (10) comprenant par ailleurs au moins un deuxième module (12, 14, 16) apte à former une deuxième partie (52, 54, 56) du faisceau (36, 38) d'éclairage du projecteur (10), les première et deuxième parties (52, 54, 56) étant aptes à former, sur un même écran, des images ayant des contours respectifs au moins partiellement non coïncidents, et **en ce que** le système de mise en forme (20) et le système optique (24) sont situés d'un même côté du dispositif de conversion (22).

2. Projecteur (10) selon la revendication 1, dans lequel le système de mise en forme est statique.

3. Projecteur (10) selon la revendication 1, dans lequel le système de mise en forme (20) est dynamique et comprend un système de balayage (21).

4. Projecteur (10) selon au moins l'une quelconque des revendications précédentes, dans lequel le premier module (12, 14, 16) comporte n sources de lumière laser (18) et m systèmes de mise en forme (20), m et n étant deux nombres entiers naturels et m étant inférieur ou égal à n.

5. Projecteur (10) selon au moins l'une quelconque des revendications précédentes, dans lequel le premier module (12, 14, 16) comporte un unique dispositif de conversion (22).

6. Projecteur (10) selon au moins l'une quelconque des revendications précédentes, dans lequel le deuxième module (12, 14, 16) comprend au moins une source de lumière laser (18) apte à émettre un deuxième rayonnement (L) et au moins un système de mise en forme (20) apte à recevoir le deuxième rayonnement (L) et à le diriger vers au moins un dispositif de conversion (22) du rayonnement en lumière blanche (B).

7. Projecteur (10) selon au moins l'une quelconque des revendications précédentes, comprenant trois modules (12, 14, 16).

8. Projecteur (10) selon au moins l'une quelconque des revendications 3 à 7, dans lequel la source de lumière laser (18) et le système de balayage (21) sont compris dans un système microoptoélectromécanique.

9. Projecteur (10) selon au moins l'une quelconque des revendications précédentes, agencé de sorte que les contours respectifs des deux images sont au moins partiellement coïncidents.

10. Projecteur (10) selon au moins l'une quelconque des revendications précédentes, agencé de sorte que les images ont des contours confondus.

11. Projecteur (10) selon au moins l'une quelconque des revendications 1 à 7, agencé de sorte que les contours respectifs des deux images sont non coïncidents.

12. Projecteur (10) selon au moins l'une quelconque des revendications précédentes, agencé de sorte que les images sont partiellement superposées.

13. Projecteur (10) selon au moins l'une quelconque des revendications précédentes, agencé de sorte que les images ne sont pas superposées.

14. Projecteur (10) selon au moins l'une quelconque des revendications 1 à 12, agencé de sorte que les images des modules sont au moins au nombre de trois et comprennent une intersection commune aux trois images.

15. Véhicule automobile **caractérisé en ce qu'**il comprend au moins un projecteur selon au moins l'une quelconque des revendications précédentes.

16. Procédé de réalisation d'un faisceau d'éclairage (36) **caractérisé en ce qu'**il comprend les étapes suivantes :
- on forme une première partie (52, 54; 56) du faisceau (36) au moyen d'au moins un premier module (12, 14, 16) d'un projecteur (10), le premier module (12, 14, 16) comportant au moins une source de lumière laser (18) émettant un premier rayonnement (L), au moins un système de mise en forme (20) recevant le premier rayonnement (L) et à le dirigeant vers au moins un dispositif de conversion (22) du rayonnement en lumière blanche (B), le dispositif de conversion (22) réémettant le rayonnement de lumière blanche (B) vers au moins un système optique (24),
- on forme une deuxième partie (52, 54; 56) du faisceau (36) au moyen d'au moins un deuxième module (12, 14, 16) du projecteur (10),
- on forme le faisceau (36) au moins au moyen des deux parties (52, 54, 56) du faisceau (36), les première et deuxième parties (52, 54, 56) formant, sur un même écran, des images ayant des contours respectifs au moins partiellement non coïncidents.
